# EUROPEAN PATENT APPLICATION

(11) **EP 4 715 710 A1**
(43) Date of publication of application: **25.03.2026**
(21) Application number: 24201496.7
(22) Date of filing: 19.09.2024
(51) Int. Cl.: G06Q 20/02, G06Q 20/08, G06Q 20/40, G06Q 20/38

(54) **MANAGING REQUESTS IN A DISTRIBUTED SYSTEM**

(71) Applicant: Mastercard International Incorporated, Purchase, NY 10577 (US)
(72) Inventor: GALLO, Francesco, 8045 Styria (AT); JOHNSON, Alan, Maldon, CM9 8HW (GB); RADU, Cristian, 1320 Beauvechain (BE)
(74) Representative: Keltie LLP

(57) **Abstract**

Aspects of the present disclosure relate to a method for processing requests in a distributed computing system. The method comprises receiving from a requestor and at a first computing node of the distributed computing system, a processing request, where the processing request requires the use of a credential. The method further comprises determining, at the first computing node of the distributed computing system, that the processing request is to be performed at a second computing node of the distributed computing system, and establishing, at the first computing node of the distributed computing system, first and second routing information associated with performing the processing the request. The method then comprises routing the processing request and the second routing information to the second computing node of the distributed computing system, using the first routing information, and performing, at the second computing node of the distributed computing system, the processing request using the credential and the second routing information

## Description

### Field of Disclosure

The present disclosure relates to managing requests in a distributed system. In particular embodiments, the disclosure relates to management of routing requests associated to credentials across a complex distributed system.

### Background to Disclosure

Processing of data requests across distributed systems is complex, particularly when requests associated with data held in one point is received at a different point in the distributed system. Ensuring that requests are properly routed to the point where the data is held across the distributed system is necessary to ensure that requests are fulfilled within an appropriate time frame.

This may apply where a credential needs to be used across a complex distributed system - for example, a system where the credential is required by a user to access or use a globally accessible system. "Credential" is here considered in a broad sense, as digital data that represents, or contributes to the representation of, a user - a credential may then be used, for example, to determine whether the user can access a digital service. Use of a credential in this way may become particularly challenging where the rules for access or use of the credential differ for different regions of the distributed system - for example, if there are requirements as to the use made of the credential in a particular geography. This may, for example, require that any interaction with that credential take place within that particular geography, thus also requiring a copy of that credential in that geography and for requests associated with that credential received at an initial location to be redirected to the particular geography associated with that credential.

The need to use a credential to access services globally in this way means that this issue is potentially relevant to any service requiring global access but subject to local legal requirements. This issue is particularly relevant for banking and financial services. Digital transactions, such as online and mobile payment transactions, are increasingly common. To address security concerns, tokenisation has been developed as a mechanism. This is a mechanism in which the card number is replaced by another number (i.e., the card is tokenised in the sense that a Token is granted corresponding to the card's PAN), which is used in its place in digital transactions. This provides additional security for the payment card and enables digital transactions to be performed efficiently. Such a token is a particular example of a credential, as discussed above.

It would be desirable to provide user credentials associated with tokenisation and related services by a set of geographically distributed endpoints within a distributed transaction system, rather than one central endpoint or data centre. This would make it easier to service local geographies according to local rules.

### Summary of Disclosure

Despite the advantages the distributed transaction system, having credentials stored in a set of geographically distributed endpoints can cause particular problems if a credential needs to be available for use but may also need to be established for use in a new geography, or when specific customer configurations need to be set to connect the customer to different regional deployments. There need to be a proper routing mechanism able to direct request associated with credentials established in a different geography without loss of data and delay in performance. It would be desirable to address these issues efficiently without making fundamental changes that would prevent use of the system by an installed base of computer devices and systems.

The present disclosure provides a description of systems and methods for processing requests in a distributed computing system.

In a first aspect, the disclosure provides a method for processing requests in a distributed computing system, the method comprising: receiving from a requestor and at a first computing node of the distributed computing system, a processing request, the processing request requiring the use of a credential; determining, at the first computing node of the distributed computing system, that the processing request is to be performed at a second computing node of the distributed computing system; establishing, at the first computing node of the distributed computing system, first and second routing information associated with performing the processing the request; routing the processing request and the second routing information to the second computing node of the distributed computing system, using the first routing information; performing, at the second computing node of the distributed computing system, the processing request using the credential and the second routing information.

In embodiments, the second routing information comprises routing information identifying a specified node of the distributed system for routing a result of the processing request to the requestor.

In embodiments, the specified node of the distributed system for routing a result of the processing request to the requestor is pre-configured.

In embodiments, the specified node of the distributed system for routing a result of the processing request to the requestor is updated after each request, based on the first device that received request.

In embodiments, specified node of the distributed system for routing a result of the processing request to the requestor is set based on the device that processed a previous request for the credential.

In embodiments, the second routing information comprises routing information to relocate the credential from the first computing node to the second computing node.

In embodiments, the credential is a token representing a payment card in a transaction system.

In embodiments, the processing request is associated with the use of a token in a transaction. Optionally, the processing request is associated with the update of the token information.

In a second aspect the disclosure provides, a distributed computing system comprising a plurality of computing nodes, wherein each computing node has a memory and a suitably programmed processor, wherein the distributed computing system adapted for routing requests received at a first computing node of the plurality of computing nodes to a second computing node of the plurality of computing nodes according to the preceding aspect.

In summary, the disclosure herein relates to methods and computing systems for routing (or re-directing) of the inbound requests associated with a credential to a local computing node (or endpoint) of a distributed system, which is assigned to process the request for the specific credential. The method relies on establishing, from the request, additional routing information comprising relocation information for the credential and/or the outbound endpoint associated with the credential. In this way, actions associated with the credential, such as migration of the credential from a first computing node to a second computing node, and redirection of the request from the inbound endpoint to the correct endpoint that proceeds to process the request, is performed in an efficient manner and without overloading the system with the transfer of credentials before they are needed in the second location, ensuring that migration is achieved securely and without loss of data.

### Brief Description of the Drawings

Figure 1 shows schematically a general embodiment of the disclosure.
Figure 2 shows schematically a distributed transaction architecture using a four-party model.
Figure 3 illustrates elements of a complex distributed system adapted to implement the transaction architecture of Figure 2.
Figure 4 shows a schematic diagram of an exemplary system for enabling request routing in the transaction architecture of Figures 2 and 3.
Figure 5 shows a schematic diagram of an exemplary embodiment for enabling re-direction of outbound traffic according to embodiments of the disclosure.
Figure 6A and 6B show schematic diagrams of exemplary embodiments for enabling credential migration within the distributed transaction architecture of Figure 2, according to embodiments of the disclosure.
Figure 7 provides a flow diagram of the of the routing process used in embodiments of the disclosure.

### Detailed Description

General and specific embodiments of the disclosure will be described below with reference to the Figures.

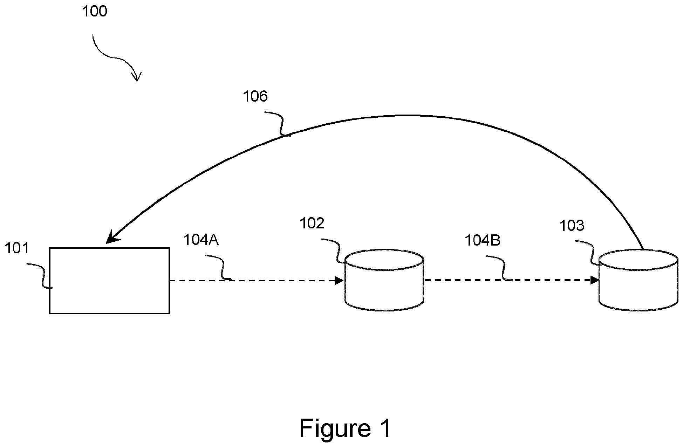

Figure 1 shows a general embodiment of the disclosure, indicating how the approach of the disclosure addresses the identified problem. A system 100 is provided in which a requestor 101 sends a processing request 104 associated to a credential to a first computer node 102 of a distributed computing system. The processing request 104 may be, for example, associated with the use of the credential, or with an update of the credential information. Upon receiving the processing request 104, the first computing node 102 determines that the processing request 104 is set to be performed at a second computing node 103. This may be determined by, for example, using a look-up service having a routing table, as part of the first computing node 102, which may provide information of which computing node is set to process the processing request 104A, as well as additional information associated with the processing request 104A. Accordingly, the first computing node 102 establishes first routing information to direct the request to the second computing node 103. However, to achieve an effective and consistent response across the distributed computing system, more may be required than simply routing of this request - for example, the routing of the response may need to be determined, or credentials may need to be relocated to be proximate to the second computing node 103 to perform the processing request 104. Accordingly, the first computing node also establishes second routing information associated with the processing request 104A which may be based, for example, partially on the information obtained from the routing table, and routes the processing request 104A to the second computing node 103 using the first routing information. The second computing device 103 then performs the processing request 104B using the credential information and the second routing information to achieve the desired performance. The response 106 to the processing request 104B is sent to the requestor 101 using an appropriate outbound endpoint (which may be, for example, determined by the second routing information).

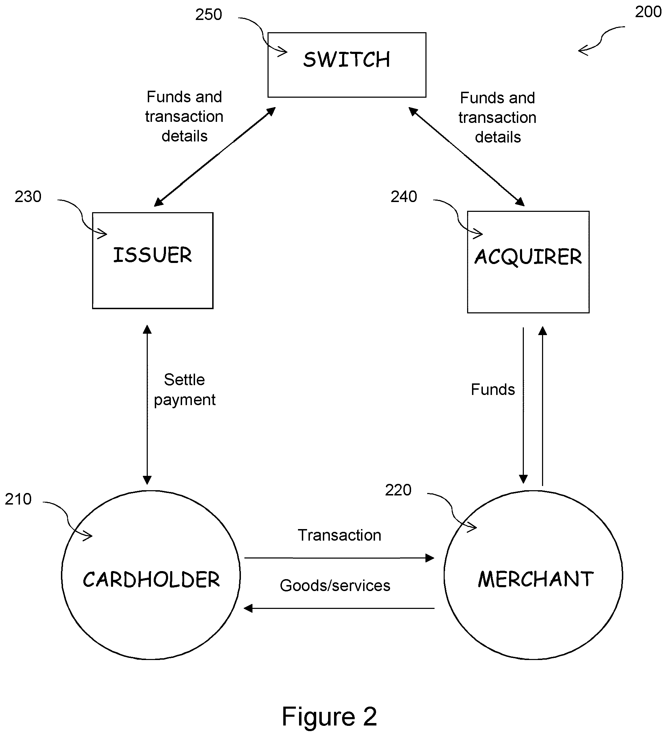

Figure 2 is a block diagram of a typical four-party model or four-party payment transaction scheme 200. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 210, merchant 220, issuer 230 and acquirer 240. In this model, the cardholder 210 purchases goods or services from the merchant 220. The issuer 230 is the bank or any other financial institution that issued the card to the cardholder 210. The acquirer 240 provides services for card processing to the merchant 220.

The model also comprises a central switch 250 - interactions between the issuer 230 and the acquirer 240 are routed via the switch 250. The switch 250 enables a merchant 220 associated with one particular bank acquirer 240 to accept payment transactions from a cardholder 210 associated with a different bank issuer 230.

A typical transaction between the entities in the four-party model can be divided into three main stages: authorisation, clearing and settlement. The cardholder 210 initiates a purchase of a good or service from the merchant 220 using their card. Details of the card and the transaction are sent to the issuer 230 via the acquirer 240 and the switch 250 to authorise the transaction. The cardholder 210 may have provided verification information in the transaction, and in some circumstances may be required to undergo an additional verification process to verify their identity (such as 3-D Secure in the case of a remote transaction - e.g., an online transaction with a endpoint). Once the additional verification process is complete the transaction is authorised.

On completion of the transaction between the cardholder 210 and the merchant 220, the transaction details are submitted by the merchant 220 to the acquirer 240 for settlement.

The transaction details are then routed to the relevant issuer 230 by the acquirer 240 via the switch 250. Upon receipt of these transaction details and completion of the clearing, the issuer 230 provides the settlement funds to the switch 250, which in turn forwards these funds to the merchant 220 via the acquirer 240.

Separately, the issuer 230 and the cardholder 210 settle the payment amount between them. In return, a service fee is paid to the acquirer 240 by the merchant 220 for each transaction, and an interchange fee is paid to the issuer 230 by the acquirer 240 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

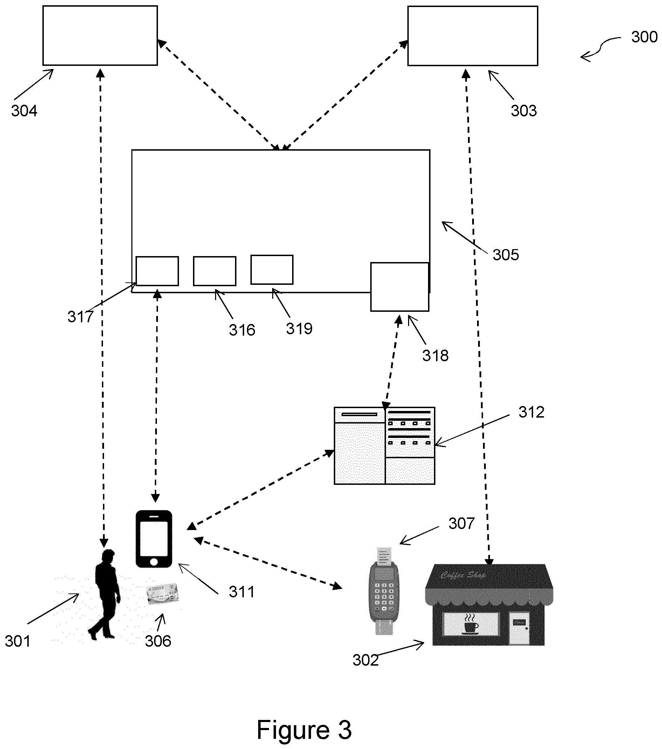

Figure 3 shows an architecture 300 according to an embodiment of the disclosure appropriate for interaction between a cardholder and a merchant. This Figure shows a general-purpose architecture for reference but shows in particular elements of an architecture used when a cardholder carries out a remote (e.g., an online) transaction with a merchant endpoint.

For a conventional transaction, a cardholder 301 will use their payment card 306 - or a mobile computing device such as smartphone 311 adapted for use as a contactless payment device - to transact with a POS terminal 307 of a merchant 302. However, in embodiments relevant to the present disclosure, the cardholder will use his or her computing device - which may be any or all of a cellular telephone handset, a tablet, a laptop, a static personal computer or any other suitable computing device (here cellular telephone handset or smartphone 311 is shown) - and other computing devices such as a smart watch or other wearable device may also be used) - to act either as a proxy for a physical payment card 306 or as a virtual payment card operating only in a digital domain. The smartphone 311 may achieve this with a mobile payment application and a digital wallet, as described below. The smart phone 311 can use this to transact with a merchant POS terminal 307 using NFC or another contactless technology, or to make a payment in association with its wallet service as discussed below. However, online transactions with a merchant are of particular interest in connection with embodiments of the disclosure, rather than contact or contactless transactions with a merchant POS terminal 307. To make an online transaction, the smartphone 311 may also be able to interact with a merchant endpoint 312 representing the merchant 302 over any appropriate network connection, such as the public internet - the connection to the merchant may be provided by an app or application on the computing device.

The transaction scheme infrastructure (transaction infrastructure) 305 here provides not only the computing infrastructure necessary to operate the card scheme and provide routing of transactions and other messaging to parties such as the acquirer 303 and the issuer 304, but also a wallet service 317 to support a digital wallet on the cardholder computing device, and an internet gateway 318 to accept internet-based transactions for processing by the transaction infrastructure. In other embodiments, the wallet service 317 may be provided similarly by a third party with an appropriate trust relationship with the transaction scheme provider. To support tokenization, a token service provider 319 is present (again, this is shown as part of transaction infrastructure 305 but may be provided by a third party with appropriate trust relationships), and the transaction scheme infrastructure provides a digital enablement service 316 to support the performance of tokenized digital transactions, and to interact with other elements of the system to allow transactions to be performed correctly - this digital enablement service may include other elements, such as token service provision and digital payment application personalization with functionality and security parameters, such as transaction keys and public key certificates.

Generally, the tokenisation process is carried out by a transaction scheme or an appropriate service provider with the permission of the payment card issuer (the issuing bank with which the cardholder has an account). Tokenised transactions are routed in the transaction scheme so that the primary account number (PAN) associated with the tokenised card can be recovered from a digital vault, also called token vault (TV), allowing normal processing of the transaction. The data associating the issuing bank and the digital wallet provider (or token requestor) where a token is stored is maintained at a data centre within a distributed transaction systems and can be used to identify, at an existing moment, tokens associated with a specific issuing bank.

For a tokenized transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

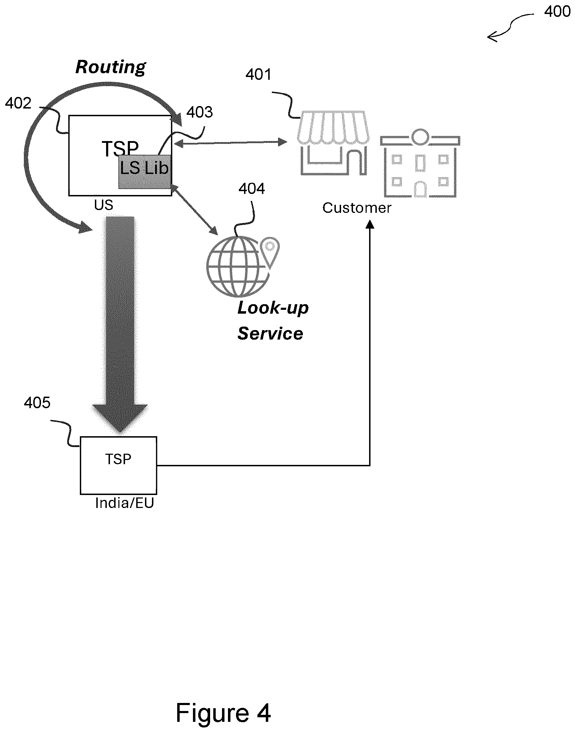

Figure 4 shows a schematic diagram of an exemplary system for enabling request routing in the transaction architecture described above and illustrated in Figures 2 and 3. The system 400 uses the applicant's TSP Token Service Provider (TSP) structure; however, this is exemplary rather than specific to the disclosure. The Token Service Provider (TSP)TSP 402 performs a variety of functions to support mobile payments and digitized transactions. The TSPTSP 402 originated as a centralised system - it is now however provided as a distributed computing system, comprising a plurality of computing nodes. These computing nodes are geographically distributed. In the system 400, a customer 401 sends a processing request (e.g., an API request) associated with a credential, which in this case may be a token. In this example the API request is send to a first endpoint (or computing node of the distributed system) 402 at a specific geographical location (e.g., US). This geographical location may be associated with the location of the customer or with pre-settings associated with the token. As a next step the first endpoint 402 calls a look-up service library 403 within or otherwise accessible to the first endpoint 402 to determine the endpoint that should process the request and to obtain routing information so that the request can be routed to it. If needed the look-up service library 403 may call, for example via API, an external look-up service 404 to query the look-up service database. The first endpoint 402, based on the routing information obtained from either the look-up service library 403 or the external look-uplook-up service 404, redirects (or routes) the processing request to a second endpoint 405 (or computing node) associated with performing the processing the request (e.g., India, EU). The second endpoint 405 may be an endpoint located at a different geographical location to the first endpoint 402 and may be the endpoint where the token associated with the processing request is stored or set to receive the token. The second endpoint 405 then processes the request and sends a response back to the customer 401.

In order to provide a consistent and effective response across the whole distributed computing system, more than simply routing the request to the second endpoint may be required - this is addressed by embodiments of the disclosure. The processing of the request may be based on the information comprised in the request, on the token information, and alternatively on additional information obtained at the look-up service library 403 or the look-uplook-up service 404 associated with the token. The additional information obtained from the look-up service library 403 or the look-up service 404 may relate, for example (but is not so limited) to previous endpoints that processed requests associated with the token, and other information related to the outbound information (from TPS to customer) or migration of data associated with the token. The response sent by the second endpoint 405 to the customer 401 may be related to enabling the customer 401 to use the token in a transaction. The response may further comprise confirmation of an update requested on the token, in addition to confirmations related but not limited to token life-cycle management (creation, suspension, resuming, deletion), identification & verification of token credentials, provision of token credentials, and customer service.

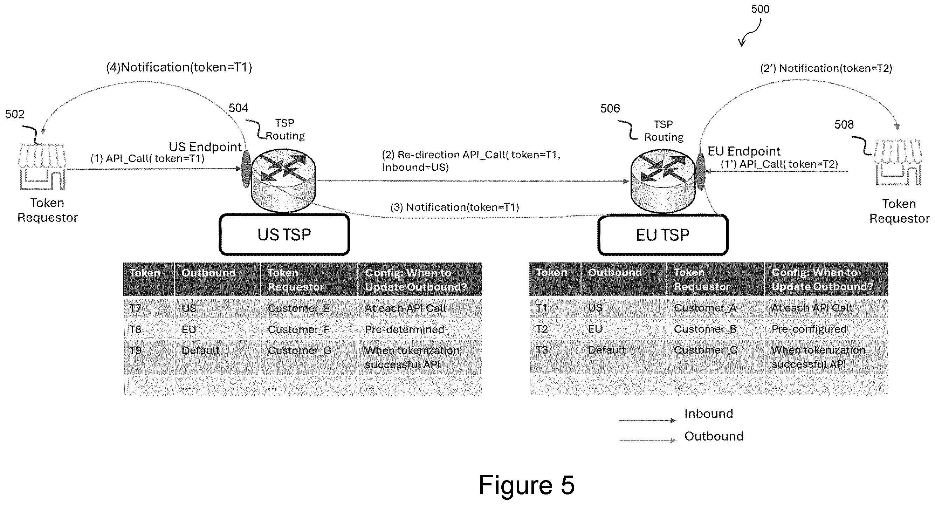

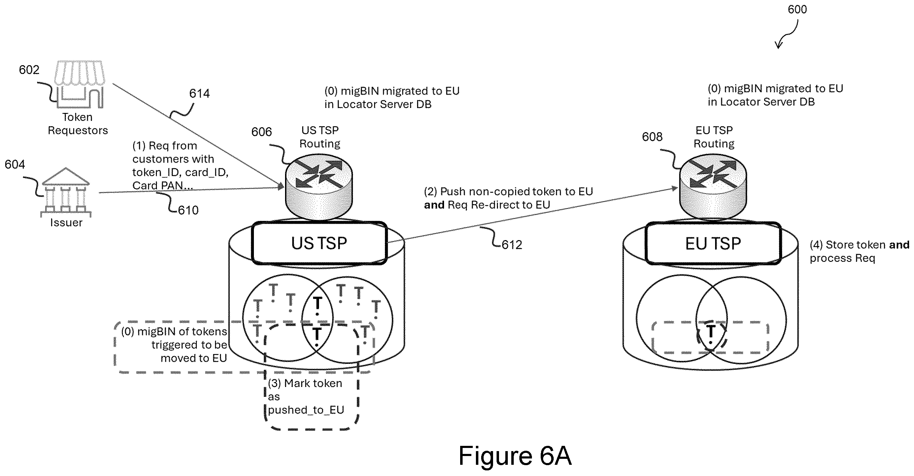

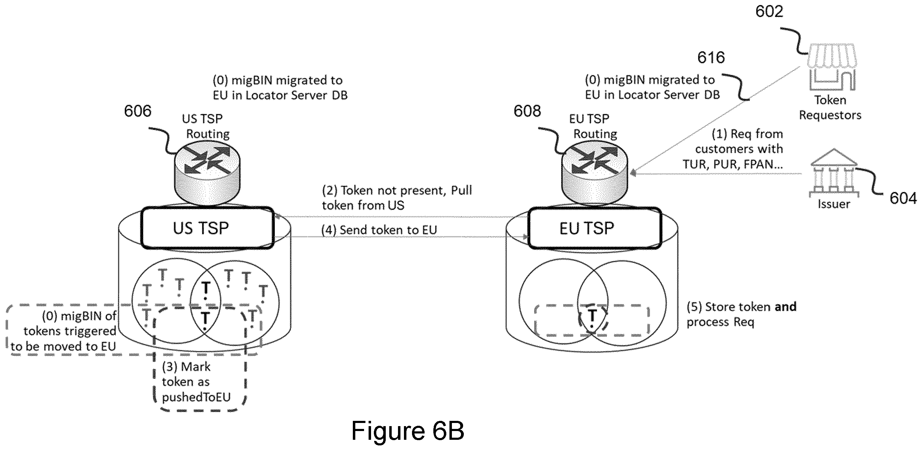

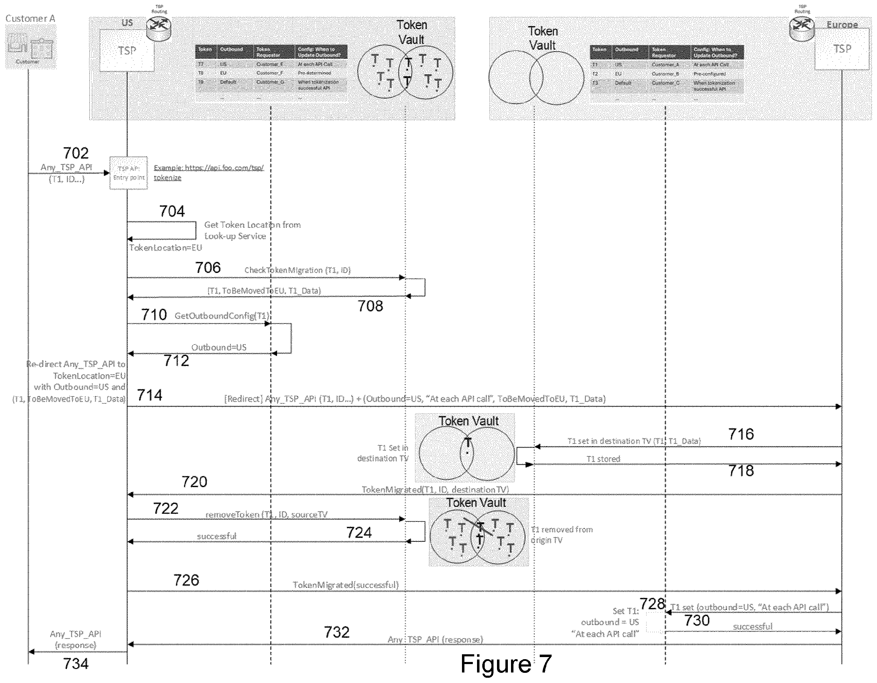

Embodiments of the disclosure use the ability to provide additional information as indicated above to provide additional routing information - second routing information - to enable processing of the request to be achieved effectively and consistently across the whole distributed computing system. Two types of second routing information are described. Firstly, second routing information that enables effective routing of outbound traffic - after the request has been processed - will be described with reference to Figure 5. Secondly, second routing information that relates to migrating a credential required for processing a request will be described with reference to Figures 6A and 6B. The use of both approaches together will then be described with reference to Figure 7.

Figure 5 shows a schematic diagram of an exemplary embodiment for enabling re-direction of outbound traffic according to embodiments of the disclosure.

As described above the process starts with a token requestor (or customer) 502 sending an API call associated with a token to a first endpoint 504 that receives the inbound call. In the example illustrated in Figure 5, the API call is associated with token T1 and is received at a endpoint located in the US. The first endpoint 504 then checks the routing information associated with the token T1 stored in a look-up service (not shown). The look-up service provides information associated with the token routing, which may be pre-configured, it may be set to be updated after each inbound API call associated with the token, or it may be set to use an outbound endpoint based on an endpoint that last successfully processed an API call associated with the token. In the case illustrated in Figure 5, the first endpoint 504 redirects the API call to a second endpoint 506 located in Europe, where the redirected API call includes the information that the customer 502 has called the first inbound endpoint 504. The second endpoint 506 processes the request and updated the outbound table of the look-up service setting for the token T1 in the outbound column the value "US" because the column "Config: When to Update the Outbound?" indicates "(changed) at each (inbound) API call". The second endpoint 506 then sends a notification for the token T1 to the token requestor 502. As per the outbounds table the notification is sent to the US endpoint. The outbound notification is then forwarded to the customer 502 through the first endpoint 504.

Figure 5 also provides an example of the routing process for a token T2 for which an API call is received at the second endpoint 506 from a second token requestor 508. In this example, look-up service provides routing information indicating that the second endpoint 506 should process the request associated with token T2. The second endpoint 506 then proceeds to process the request and sends a notification for the token T2 to the token requestor 508, in accordance with the outbound information, where it is indicated that the notifications for token T2 should be sent through the endpoint located in Europe (i.e., the second endpoint 506). In this example, the outbound information in the routing table is not updated because the column "Config: When to Update the Outbound?" indicates "Pre-configured", which indicates that the outbound is always set and it cannot be dynamically changed.

It is to be understood that these are non-limiting examples, which are provided to illustrate the routing process. Other implementations of the routing table are possible, including the incorporation of additional information associated with, for example, information on the token requestors outbound, token requestors configuration, issuer requestors outbound, issuer requestors configuration, among others.

Figures 6A and 6B show a schematic diagram of an exemplary embodiment for enabling credential migration (e.g., a token migration) within the distributed transaction architecture of Figure 2.

The credential migration illustrated in Figure 6A relates to a token migration from a token vault located at a first endpoint to a second endpoint of a distributed system as part of the response to an API call 614 received at the first endpoint from a token requestor 602 and associated with a token to be migrated. In the exemplary process of Figures 6A, the routing of the API call 614, as well as of the token to be migrated is performed as described above in relation to Figure 5. The token migration starts with the definition of tokens and data related to an issued card of a specific BIN ("migBIN") which must be migrated from a first endpoint 606 (e.g., US TSP) to a second endpoint 608 (e.g., EU TSP). As described above, upon receiving the API call 614 associated with a token, the first endpoint 606 accesses a look-up service, which may be within the endpoint or external to the endpoint. The look-up service is configured to provide the information on the endpoint to which the API call should redirected to, and to which endpoint the token associated with the API call should be migrated. Alternatively, the look-up service may re-direct the tokens within the migBIN that must be migrated. As such, once the tokens are marked as to be migrated by an issuer 604, the migration process is only triggered when a token requestor 602 sends an API request related to a token (or associated card) that belongs to the migBIN, and which is still to be migrated to another endpoint (e.g., the second endpoint 608, EU TSP). As such, once the first endpoint 606 identified that the token associated with the API call 614 is set to be migrated to the second endpoint 608, it redirects the API call 614 to the second endpoint 608 together with the token data stored in the migBIN, and marks the token as having been migrated to the second endpoint 608.The second endpoint 608, receives an API call 612 comprising the token data and the redirected request of the API call 614 and first stored the migrated token data and then processes the API call. The second endpoint 608 then sends a notification to the token requestor 602.

The token migration process may alternatively be triggered when the token requestor 602 sends an API request to the second endpoint 608 related to the token (or associated card) that belongs to the migBIN still to be migrated from the first endpoint 606 to the second endpoint 608, as shown in Figure 6B. In this example, the token data is not present at the second endpoint 608, and the look-up service provides the information to the second endpoint 608 that the API request 616 is related to a token that belong to a migBIN under migration from the first endpoint 606. The second endpoint 608 then requests to pull the token data from first endpoint 606. The token data stored in the first endpoint 606 is sent to the second endpoint 608, and it is then marked as migrated to the second endpoint 608. At the second endpoint 608, the token data is firstly stored and then the second endpoint 608 processed the API request 616. Once the request is processed, the second endpoint 608 sends a notification to the token requestor 602.

Figure 7 provides a flow diagram with exemplary seps of the routing process used in embodiments of the disclosure and described in relation to Figures 6A and 6B above.

At a first step 702, a customer A sends a processing request to an endpoint. The request may be an API call associated with, for example, but not limited to, the use of a token, in this case token T1, or with updating token information. Furthermore, the endpoint may be an endpoint that provides token digitization and management, which may be connected to digital wallet provides, Merchants and token requestors. The endpoint that receives the API call from the customer is located at a specific geographical location that may be different from the location where the token is stored. In the example illustrated in the flow diagram of Figure 7, the endpoint is located in the US; however, in other implementation of the routing process the API call may be received in any other suitable location linked to the customer or the token associated with the API call. At step 704, the endpoint obtains the token location from a look-up service based on identification associated with the customer and the token, such as for example, ID, although other identification methods may be used. At step 706 the US endpoint checks its token vault to verify whether token T1 is set to be migrated, by receiving, in step 708 token T1 data and a confirmation of the migration status, which in this case sets token T1 to be migrated to the Europe endpoint. At step 710, the US endpoint requests, from the look-up service the outbound routing configuration for token T1 and at step 712 the US endpoint receives, from the look-up service the endpoint configured to send the outbound response to the customed A, which in this example is the US endpoint. At step 714, the US endpoint redirects to the Europe endpoint the API call and the information related to the ID associated with token T1, together with the data defining the outbound endpoint set as the US endpoint and the data related to the migration of token T1 to the Europe endpoint. Alternatively, the look-up service may be responsible for the outbound routing of the API calls, such that redirecting the API call associated with token T1 at step 714 may, alternatively, be performed by the look-up service. At step 716, token T1 is set at the destination token vault in the Europe endpoint, and at step 718 the token T1 is stored at the Europe endpoint and a confirmation message is sent to the US endpoint that token T1 has been migrated (step 720). At step 722, and once the US endpoint received the confirmation of migration of token T1, it sends a message to its token vault (i.e., the origin token vault) to remove token T1, and at step 724 the US endpoint receives confirmation from its token vault that token T1 has been removed. At step 726 the US endpoint send a message to the Europe endpoint confirming that the migration of token T1 has been successfully completed. The Europe endpoint then, at step 728, configures the outbound endpoint for request associated with token T1. In this particular example the outbound endpoint for token T1 is set to be updated at each API call, such that in this case the outbound endpoint is configured to the US endpoint. However, this is an exemplary implementation only and should not be interpreted as a limiting the outbound endpoint configuration, such that other configurations for the outbound endpoint can also be used within the process described herein. At step 730 the Europe endpoint receives a confirmation from its token vault that the outbound endpoint for API calls associated with token T1 has been successfully configured and the Europe endpoint then processes the API call and sends the response to the US endpoint, as the outbound endpoint (step 732). The US endpoint then sends the response to the API call associated with token T1 to customer A (step 734).

As described above, the look-up service may provide information to the token requestor regarding the endpoint responsible for processing API calls associated with a specific token as well as outbound configuration details to be set-up.

In addition, in exemplary implementations of the present disclosure, the look-up service may provide information for optimising the processing of the API call associated with a specific token, by means of identifying the inbound endpoint which will minimise latency in the processing of the API call.

For example, and with reference to Figure 6A, when token T1 is migrated from endpoint 606 to endpoint 608, a token requestor may experience performance degradation in the processing of the API call associated with token T1 when the API call is sent to endpoint 606. Accordingly, in examples of the present disclosure, when the look-up service receives an API call for token T1 that includes a request for the best performance endpoint, it may provide to the token requestor information of the best endpoint to call for token T1, which in this example is endpoint 608.

The information provided by the look-up service for optimising the processing of the API call does not force the API call to be redirected, but it provides information passively to the token requestor, so that this may then be used by the token requestor to redirect the API call to the best performing endpoint. The token requestor may be required to whitelist the addresses of the notifications received from the look-up service, and may require the token requestor to to pin the leaf certificates. In this exemplary implementation, the look-up service provides the domain name, IP addresses, and leaf certificates needed to establish the inbound, as well as the outbound, connection with a specific TPS.

While the above embodiments relate specifically to the processing of requests associated with tokens and with the migration of tokens, it will be appreciated by the skilled person that the same principles may be employed for requests and the migration of any other credential, and may be used in contexts that are not financial. For example, the same approach may be used to process requests and migrate a user's credential used for access control from one geography to another geography. More generally, the skilled person will appreciate that many modifications may be made to the embodiments described above within the scope of the claims.

## Claims

1. A method for processing requests in a distributed computing system, the method comprising:
receiving from a requestor and at a first computing node of the distributed computing system, a processing request, the processing request requiring the use of a credential;
determining, at the first computing node of the distributed computing system, that the processing request is to be performed at a second computing node of the distributed computing system;
establishing, at the first computing node of the distributed computing system, first and second routing information associated with performing the processing the request;
routing the processing request and the second routing information to the second computing node of the distributed computing system, using the first routing information;
performing, at the second computing node of the distributed computing system, the processing request using the credential and the second routing information.

2. The method of Claim 1, wherein the second routing information comprises routing information identifying a specified node of the distributed system for routing a result of the processing request to the requestor.

3. The method of Claim 2, wherein the specified node of the distributed system for routing a result of the processing request to the requestor is pre-configured.

4. The method of any of Claim 2, wherein the specified node of the distributed system for routing a result of the processing request to the requestor is updated after each request, based on the first device that received request.

5. The method of Claim 2, specified node of the distributed system for routing a result of the processing request to the requestor is set based on the device that processed a previous request for the credential.

6. The method of any preceding claim, wherein the second routing information comprises routing information to relocate the credential from the first computing node to the second computing node.

7. The method of any previous claim, wherein the credential is a token representing a payment card in a transaction system.

8. The method of Claim 7, wherein the processing request is associated with the use of a token in a transaction.

9. The method of Claim 7, wherein the processing request is associated with the update of the token information.

10. A distributed computing system comprising a plurality of computing nodes, wherein each computing node has a memory and a suitably programmed processor, wherein the distributed computing system adapted for routing requests received at a first computing node of the plurality of computing nodes to a second computing node of the plurality of computing nodes according to the method of any of Claims 1 to 9.
